# EUROPEAN PATENT SPECIFICATION

(11) **EP 3 842 288 B1**
(45) Date of publication and mention of the grant of the patent: **17.08.2022**
(21) Application number: 20215400.1
(22) Date of filing: 18.12.2020
(51) Int. Cl.: B60Q 3/43, B60Q 3/47, B64D 11/00

(54) **LIGHTING SYSTEM FOR A VEHICLE CABIN**
BELEUCHTUNGSSYSTEM FÜR EINE FAHRZEUGKABINE
SYSTÈME D'ÉCLAIRAGE POUR CABINE DE VÉHICULE

(30) Priority: 18.12.2019 US 201962949518 P
(43) Date of publication of application: 30.06.2021
(73) Proprietor: Bombardier Inc., Dorval QC H4S1Y9 (CA)
(72) Inventor: GAGNON-SEGUIN, Louis, Montreal, Quebec H3X 2R9 (CA)
(74) Representative: HGF

(56) References cited:
- EP-A1- 3 543 121
- EP-A1- 3 738 878
- WO-A1-2015/130572
- US-A1- 2016 353 551
- US-A1- 2018 281 673

## Description

### FIELD OF TECHNOLOGY

The present invention relates generally to lighting systems for vehicle cabins, and more particularly to lighting systems that provide cabin illumination that follows passenger movement within a vehicle cabin.

### BACKGROUND

Vehicle cabins, such as aircraft cabins or train cabins, comprise cabin lighting for providing illumination to the vehicle cabin. This cabin lighting may include overhead lighting, wall lighting, floor lighting, kick-space lighting, monument lighting as well as individual passenger lighting, such as dedicated lights in a passenger service unit (PSU), among other possibilities. When a vehicle cabin is not sufficiently illuminated from outdoor light that streams through the cabin's windows, the cabin lighting is used to provide a desired level of cabin illumination.

At night, the cabin lighting is generally turned off in order to provide a relatively dark environment that is more conducive to allowing passengers to sleep. However, if a passenger needs to get up and walk around while the cabin lighting is off, such as to go to the lavatory or get a glass of water, the vehicle cabin may be too dark for them to navigate their way safely. In such a case, one or more light sources of the cabin lighting may be turned on or activated, which may be disruptive to other passengers who are trying to sleep. For example, the activation of one or more light sources may illuminate an entire cabin zone, a complete row of passenger seats, or may provide a light intensity or orientation that may be far too bright and disruptive to other passengers.

There is therefore a desire for a cabin lighting system that is able to provide suitable cabin illumination to a passenger who wants to move safely in a dark cabin environment, without providing illumination that is disruptive to others.

EP 3 543 121 A1 shows a lighting system for an aircraft cabin, wherein the system provides a cabin illumination that follows the movement of a service cart used by a cabin attendant.

### SUMMARY

It is an object of the present invention to ameliorate at least some of the inconveniences present in the prior art.

According to the present invention, there is provided a system for providing cabin lighting within a vehicle cabin. The system includes: cabin lighting for providing illumination to the cabin; a location positioning system for detecting a location of a passenger; and a lighting control system. The lighting control system is configured for: determining whether a predetermined cabin condition is satisfied; detecting movement of a passenger within the vehicle cabin on a basis of signals from the location positioning system; and upon detecting movement of the passenger within the cabin and upon determining that the predetermined cabin condition is satisfied, causing the cabin lighting to provide cabin illumination with a localized illumination zone at a location of the passenger, wherein the localized illumination zone follows the movement of the passenger, and wherein the localized illumination zone is positioned such that a greater portion of the localized illumination zone is positioned in front of a direction of movement of the passenger than in a direction opposite said direction of movement.

In some embodiments, the predetermined cabin condition is satisfied when ambient light in the cabin is below a predetermined threshold.

In some embodiments, the predetermined cabin condition is satisfied when the cabin lighting is in an off condition.

In some embodiments, the predetermined cabin condition is satisfied when the cabin lighting is in an off condition and an environment outside the vehicle is dark.

In some embodiments, the location positioning system comprises at least one of proximity sensors, motion sensors and weight sensors.

In some embodiments, the location positioning system comprises at least one of RFID tags, WiFi access points, LiFi access points and Bluetooth beacons.

In some embodiments, the lighting control system further detects a direction of movement of the passenger on a basis of signals from the location positioning system.

In some embodiments, the cabin lighting comprises at least one of overhead lighting, wall lighting, galley lighting, monument lighting, kick-space lighting, PSU lighting, pathway lighting and lavatory lighting.

In some embodiments, the cabin lighting comprises at least one lighting device in the form of LED lights, OLED strips, OLED panels, spot lights and fibre-optic lights.

In some embodiments, the localized illumination zone illuminates only a lower portion of the vehicle cabin.

In some embodiments, the localized illumination zone is focused towards the passenger's location.

In some embodiments, the localized illumination zone is centered about the passenger's location in a lateral direction

In some embodiments, the localized illumination zone has a longitudinal dimension of between 2.286m-3.048m (90-120 inches).

Additional and/or altemative features, aspects and advantages of implementations of the present invention will become apparent from the following description, the accompanying drawings and the appended claims.

### BRIEF DESCRIPTION OF THE DRAWINGS

For a better understanding of the present invention, as well as other aspects and further features thereof, reference is made to the following description which is to be used in conjunction with the accompanying drawings, where:
FIG. 1 is a top plan view of an exemplary aircraft comprising a cabin lighting control system as disclosed herein;
FIG. 2 is an interior perspective view of a first exemplary cabin area of the aircraft of FIG. 1 ;
FIG. 3 is an interior perspective view of a second exemplary cabin area of the aircraft of FIG. 1 ;
FIG. 4 is a schematic representation of the cabin lighting control system operatively connected to one or more other aircraft systems of the aircraft of FIG.1;
FIG. 5 is a flow diagram illustrating an exemplary method for providing cabin illumination to the aircraft of FIG. 1;
FIG. 6 is a top plan view of an exemplary cabin floor-plan for the aircraft of FIG. 1;
FIG. 7 is an interior perspective view of a third exemplary cabin interior of the aircraft of FIG. 1, showing a localized illumination zone provided by the cabin lighting system;
FIGS. 8A-8C provide top schematic views of various non-limiting embodiments for the localized illumination zone provided by the cabin lighting control system of FIG. 4; and
FIG. 9 is a top plan view of a non-limiting exemplary localized illumination zone that provides two different illumination portions.

### DETAILED DESCRIPTION

The present invention relates to cabin lighting in mobile vehicles. In various aspects, the present invention relates to determining cabin conditions within the vehicle cabin, detecting movement of a passenger within the vehicle cabin and providing cabin illumination that follows (e.g. tracks or shadows) the movement of the passenger within the vehicle cabin. Accordingly, the present disclosure discloses a system for providing cabin illumination within a vehicle cabin.

The cabin illumination in accordance with the present invention is provided to a passenger when cabin conditions within the vehicle cabin are dark. The cabin illumination may be provided as a localized illumination zone that is focused on a passenger's position or location within the vehicle cabin. The cabin illumination may be provided as discreet lighting (i.e. dim lighting) in a lower portion of the vehicle cabin. The localized illumination zone follows the movement of the passenger so that the passenger may move safely in a dark cabin environment without disrupting other passengers.

The present disclosure will describe the invention in the context of an aircraft cabin, however it is to be understood that the present invention could equally apply to other types of vehicles having vehicle cabins, such as trains, busses, watercraft (e.g. ships or boats), spacecraft, trucks and automobiles, among other possibilities.

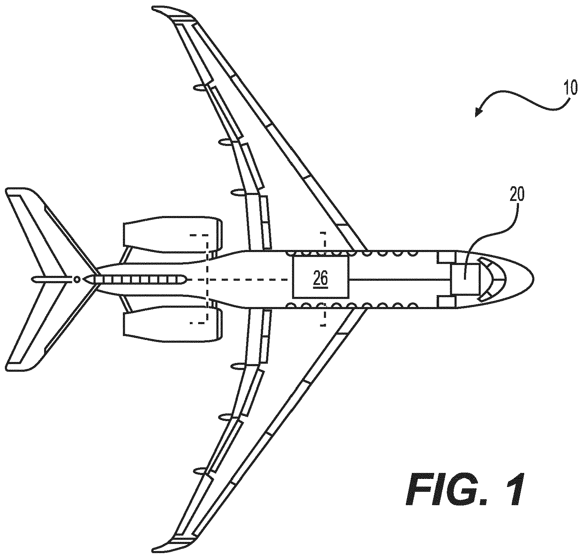

FIG. 1 is a top plan view of an exemplary aircraft 10 with which various aspects of the present invention may be used. Aircraft 10 may include, for example, any suitable aircraft such as corporate (i.e. business), private, commercial or any other type of aircraft, including fixed-wing and rotary-wing aircraft, as well as local and remote piloted aircraft. Aircraft 10 may, for example, be a narrow-body, twin engine jet airliner.

Also shown schematically in FIG. 1 is an onboard lighting control system 20 for controlling illumination on board the aircraft 10. The onboard lighting control system 20 may be coupled to various cabin lighting units, referred to collectively as cabin lighting 26, for controlling the activation/de-activation and adjustment of lighting within the aircraft cabin. Onboard lighting control system 20 and cabin lighting 26 are shown in FIG. 1 as being superimposed over aircraft 10 for illustration purposes only.

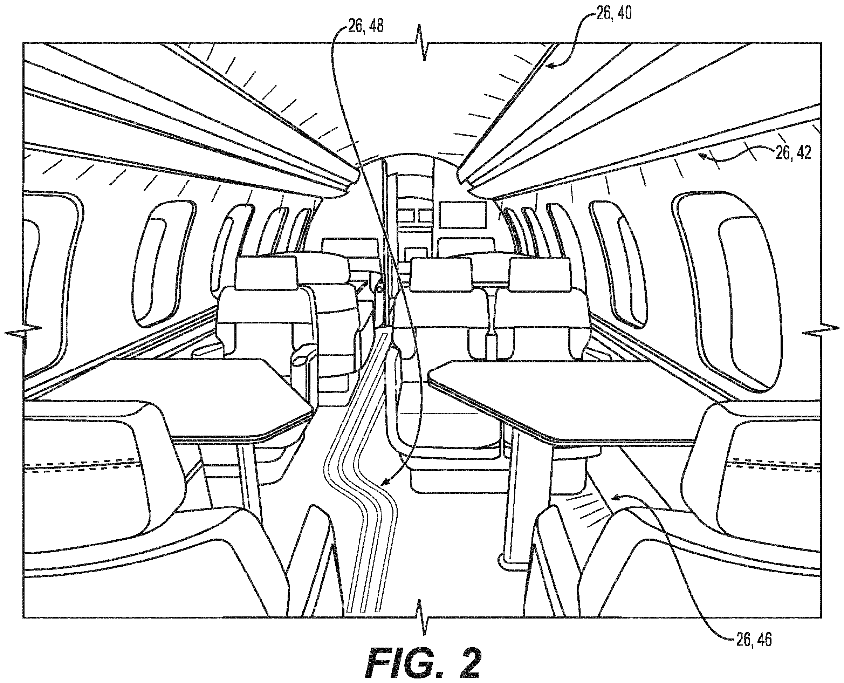

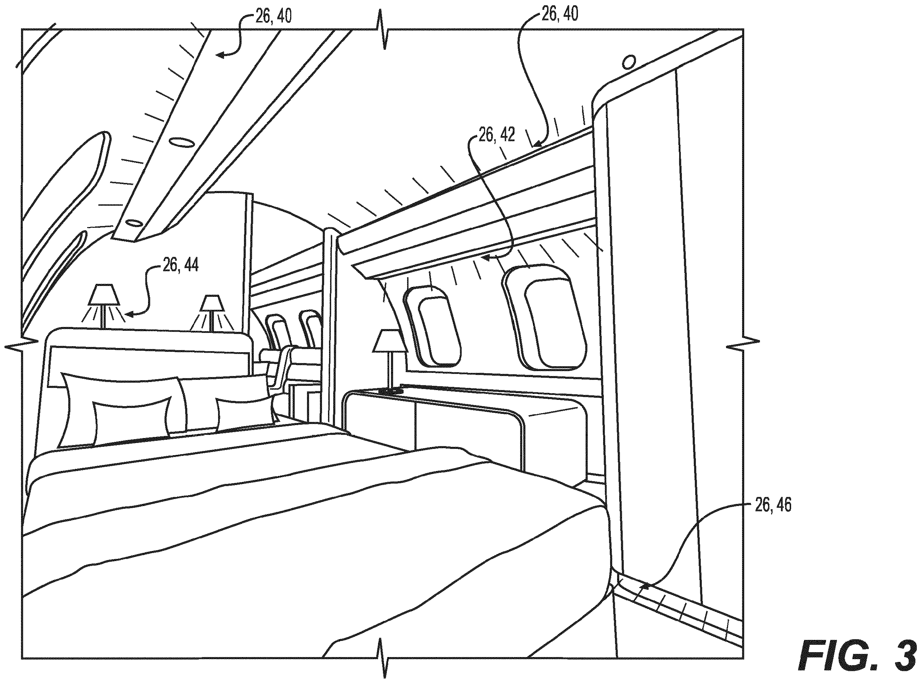

FIGS. 2 and 3 show perspective interior views of different cabin areas within a private aircraft in which the present invention could be used. More specifically, FIGS. 2 and 3 illustrate some non-limiting examples of lighting sources of the cabin lighting 26 that could be used to provide cabin illumination. The different lighting sources include by way of example, overhead lighting 40, wall lighting 42, monument lighting 44, kick-space lighting 46, pathway lighting 48, personal service unit (PSU) lighting (not shown), and lavatory lighting (not shown), among other possibilities. The different lighting sources of the cabin lighting 26 may implemented via many different types of lighting devices, including, without limitation, LED lights, OLED lights, spot lights and fibre-optic lights, among other possibilities. As will be understood, the present invention is not intended to be limited by the specific cabin lighting 26 described herein.

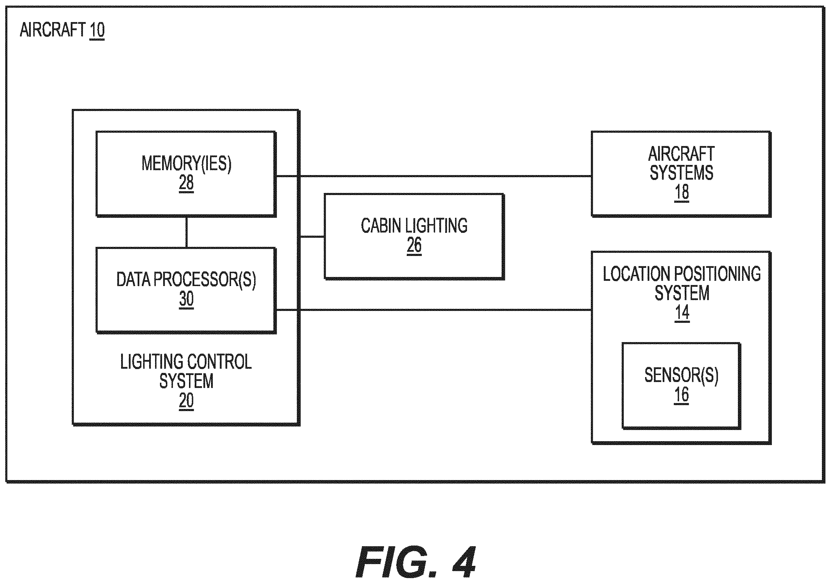

FIG. 4 shows a schematic representation of aircraft 10 that comprises lighting control system 20 communicatively coupled to cabin lighting 26, a location positioning system 26 as well as other aircraft systems, collectively referred to as aircraft systems 18. The lighting control system 20 may communicate with one or more aircraft systems 18 in order to receive information that may be used to detect or determine predetermined cabin conditions. For example, the lighting control system 20 may receive information from aircraft systems 18 indicative of conditions associated with the aircraft, the aircraft cabin or even the external environment in which the aircraft is flying. By way of example, the aircraft systems 18 may include a cabin management system, a flight management system, an avionics system, an inflight entertainment system, an engine system, a landing gear system and flight control computers, among many other possibilities. The present invention is not intended to be limited to the aircraft systems 18 to which the lighting control system 20 may be in communication.

As will be described below, lighting control system 20 may be operatively connected to location positioning system 14 for detecting a position and/or movement of one or more passengers' onboard aircraft 10. As shown, the location positioning system 14 may comprise one or more sensors 16 (hereafter "sensors") for detecting the presence or proximity of a passenger.

The llighting control system 20 may be operatively connected either directly or indirectly, via wired or wireless connections, to the cabin lighting 26, the aircraft systems 18 and the location positioning system 14, including its sensors 16. In some embodiments, lighting control system 20 may be operatively connected to a network to permit receipt of data, or sharing of data, with the aircraft systems 18, cabin lighting 26 and location positioning system 14 onboard aircraft 10. Such a network may comprise one or more data buses, for example.

As shown in FIG. 4, the lighting control system 20 may comprise one or more data processors 30 (referred hereinafter as "processor 30") and non-transient computer-readable memory(ies)/medium(ia) (referred hereinafter as "memory 28") containing instructions (such as control logic, or one or more applications) readable and executable by processor 30 so as to implement a computer-implemented process such that instructions, when executed by the data processor 30 can cause the functions/acts described herein. While the lighting control system 20 is shown in FIG. 4 as a stand-alone system, it is understood that it may be embodied as part of a larger cabin management system that comprises the cabin lighting 26 and location positioning system 14, and that is responsible for controlling multiple different cabin functions, such as the temperature, audio system and window shades, amongst other functions. Alternatively, the lighting control system 20 may be an integral part of the cabin lighting 26 wherein the processor 30 and memory 28 is embedded within various lighting sources.

Processor 30 may, for example, comprise or be part of one or more digital computer(s) or other data processors or other suitably programmed or programmable logic circuits. Processor 30 may comprise general purpose computer(s), special purpose computer(s), or other programmable data processing apparatus. Processor 30 may be configured for use onboard aircraft 10.

Memory 28 may comprise any combination of one or more suitable computer readable medium(ia). The computer readable medium may be a non-transitory computer readable storage medium. Such non-transitory computer readable storage medium may comprise, for example, but not be limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

In the context of this disclosure, a computer readable storage medium may be any tangible medium that can contain, or store instructions for use by or in connection with an instruction execution system, apparatus, or device such as processor 30.

Computer program code for carrying out operations for aspects of the present invention in accordance with instructions stored in memory 28 may be written in any combination of one or more programming languages, including an object-oriented programming language such as Java, Smalltalk, C++ or the like and conventional procedural programming languages, such as the "C" programming language or other programming languages.

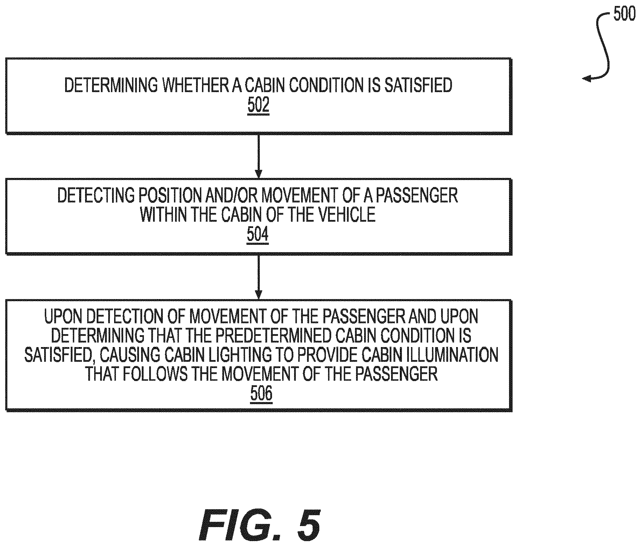

FIG. 5 is a flowchart of an exemplary method 500 for providing cabin illumination that follows (i.e. tracks or shadows) the movement of a passenger. Method 500 or part(s) thereof may be computer-implemented and may be performed using lighting control system 20 based on instructions stored in memory 28 and executed by processor 30. In various embodiments, method 500 comprises determining whether a predetermined cabin condition is satisfied (see block 502) on aircraft 10; detecting movement of a passenger within the cabin of the aircraft 10 (see block 504) and upon detection of movement of the passenger and upon determining that the predetermined cabin condition is satisfied, causing the cabin lighting 26 to provide cabin illumination that follows the movement of the passenger. Method 500 or parts thereof may be performed while aircraft 10 is in flight. Alternatively, method 500 or parts thereof may be performed while aircraft 10 is on the ground, but before being shut down.

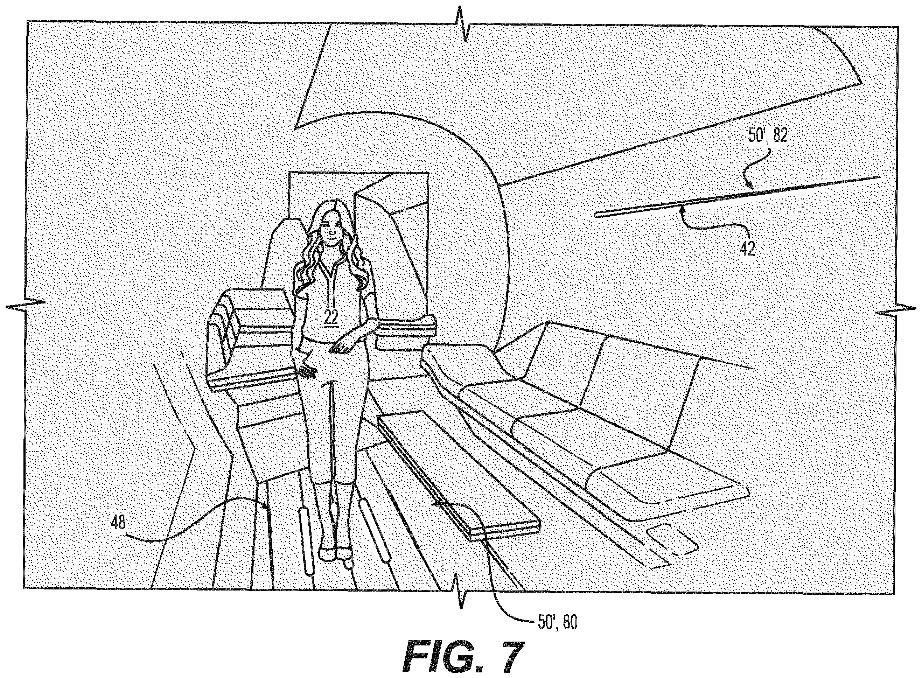

In accordance with certain aspects of the invention, when predetermined cabin conditions exist (i.e. a dark cabin environment), the cabin lighting 26 is caused to provide cabin illumination to a passenger in the form of a localized illumination zone. Furthermore, the localized illumination zone is provided in a manner that allows it to follow movement of the passenger within the vehicle cabin. For the sake of understanding, FIG. 7 shows a non-limiting example of a localized illumination zone 50' that is provided to passenger 22 and that is able to follow (i.e. track or shadow) the movement of passenger 22. The localized illumination zone 50' may provide relatively dim lighting that provides sufficient cabin illumination to allow the passenger 22 to move safely through the cabin, but not enough illumination to disturb other passengers. In certain embodiments, the localized illumination zone 50' may provide cabin illumination in only a lower portion of the vehicle cabin. The localized illumination zone 50' is not intended to provide sufficient illumination to allow a passenger to carry out day-time activities such as reading or eating, in comfort. More details and description surrounding the nature and characteristics of the localized illumination zone 50' will be provided below.

As indicated above, step 502 of method 500 comprises determining whether a predetermined cabin condition is satisfied. The predetermined cabin condition may be that the cabin environment is dark (i.e. low illumination). There is reduced benefit to providing a localized illumination zone 50' that follows the movement of the passenger 22 during broad daylight or when the cabin is fully illuminated. Instead, providing the localized illumination zone 50' is most beneficial when the cabin is dark, such as when it is night time and/or when the cabin lighting 26 is in an off condition.

In accordance with a first exemplary embodiment, the lighting control system 20 may determine that the predetermined cabin condition is satisfied (i.e. that the cabin environment is dark) when ambient light within the cabin is measured to be below a predetermined threshold. For example, the predetermined threshold may be that the ambient light in the cabin has an illuminance value of less than 50 lux. The illuminance value may be obtained by an instrument such as a photometer or radiometer, and provided to the processor 30 of the lighting control system 20 from the instrument either wirelessly or over wired connection.

In accordance with a second exemplary embodiment, the lighting control system 20 may determine that the predetermined cabin condition is satisfied (i.e. that the cabin environment is dark) if the cabin lighting 26 is in an off condition. This information may be provided to the lighting control system 20 via the cabin management system (i.e. from aircraft systems 18), among other possibilities. The predetermined cabin condition may be satisfied when all cabin lighting 26 in the vehicle cabin is in the off condition, or when only some of the cabin lighting 26 is in the off condition. By way of a non limiting example, it may be assumed that the cabin environment is sufficiently dark if the overhead lighting 40, wall lighting 42, kick-space lighting 46 and pathway lighting 48 are in the off condition, but the monument lighting 44 is still in the on condition. In some business aircraft, the cabin is divided into 2, 3 or 4 separate zones separated by bulkheads with doors. In a specific embodiment, it may be assumed that the cabin environment in which the passenger 22 is located is sufficiently dark if the cabin lighting 26 in the specific aircraft zone (i.e. the area between two bulkheads) in which the passenger 22 is located is in an off condition. There are numerous different conditions associated with cabin lighting 26 that could be considered to satisfy the predetermined cabin condition, which would be understood to a person of skill in the art. The present invention is not intended to be limited to the specific cabin conditions described herein.

In some cases, the cabin lighting 26 may be in an off condition because there is sufficient daylight streaming into the cabin through the windows to avoid the need to have the cabin lighting 26 turned on. In such a case, the predetermined cabin condition may be satisfied when the cabin lighting 26 is in an off condition and the environment outside the vehicle is dark. Information indicative that the environment outside the vehicle is dark may be derived or assumed based on information indicative of the time of year, the time of day, the time zone in which the vehicle is travelling and/or weather information, among other possibilities. This type of information may be provided to the lighting control system 20 from a flight management system or flight control computers (i.e. aircraft systems 18), among other possibilities.

Once the cabin lighting control system 20 has determined that the predetermined cabin condition is satisfied (i.e. that the cabin environment is dark), the cabin lighting system may proceed to step 504. Alternatively, the cabin lighting control system 20 may be continuously performing steps 502 and 504 simultaneously, as opposed to one after the other.

At step 504, method 500 comprises detecting a position and/or movement of a passenger 22 within the cabin. This may be done at least in part on a basis of signals from sensors 16 of the location positioning system 14. Sensors 16 of the location positioning system 14 may comprise proximity sensors, motion sensors, weight sensors, or a combination thereof. Sensors 16 may be located throughout the cabin in positions suitable for detecting a position of the passenger.

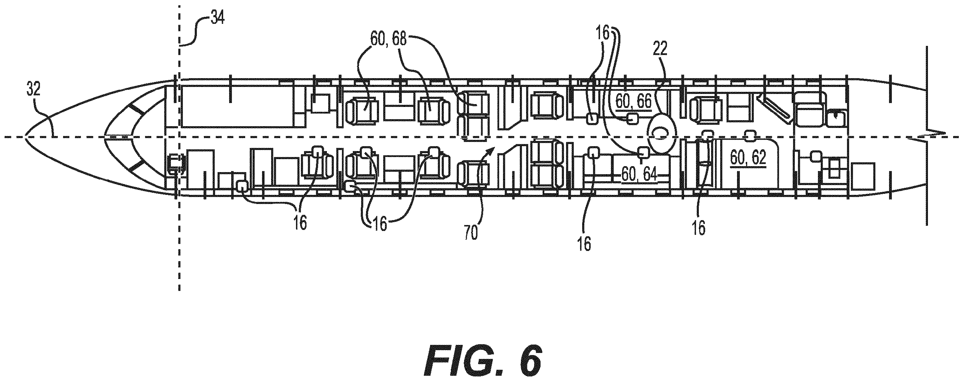

Shown in FIG. 6 is a non-limiting example of a cabin layout of a business aircraft with a plurality of sensors 16 placed throughout the vehicle cabin 70. The vehicle cabin 70 defines a longitudinal axis 32 that is substantially parallel to a longitudinal axis of the aircraft 10 and extends from a tip to a tail of the aircraft 10, and a lateral axis 34 that is substantially parallel to a lateral axis of the aircraft 10 and generally extends from one wing tip to another (not shown). When sensors 16 are motion or proximity sensors, the sensors 16 may be positioned towards the bottom of the aircraft walls, or towards the bottom of various aircraft monuments 60. By way of example, the aircraft monuments 60 may include a bed 62, a couch 64, a credenza 66 and seats 68, among other possibilities. When positioned towards the bottom of the aircraft walls or monuments, the motion or proximity sensors are well positioned to detect the presence of a passenger's 22 feet or legs as the passenger moves through the cabin. In the case where the sensors 16 are weight sensors, the sensors 16 may be positioned in the floor under the floor finish (i.e. carpet, wood, tiles, etc), for example. In this manner, the weight sensors are able to detect the weight of a passenger 22 as he/she moves through the cabin.

As shown schematically in FIG. 4, the lighting control system 20 is operatively connected with the sensors 16 for receiving signals generated by the sensors 16. On the basis of signals from one or more sensors 16, the lighting control system 20 is able to detect a position (or location) and/or movement of the passenger 22.

More specifically, each individual sensor is associated with an individual ID or signature that allows the processor 30 of the lighting control system 20 to identify an individual sensor 16 from which a received signal has originated. For example, stored in memory 28 of the lighting control system 20 may be a mapping (e.g. look-up table or database) of the ID or signature of each individual sensor 16 with an identification of a position or location of that individual sensor 16 within the vehicle cabin 70. A common or separate mapping (e.g. look-up table or database) stored in memory 28 may also associate a position or location within the cabin with various lighting devices, such as individual LEDs, spot lights or optical fibers of the cabin lighting 26 that could provide illumination to that specific cabin position or location.

Upon receipt of a signal from an individual sensor 16, the processor 30 is able to determine a location within the cabin 70 of that individual sensor 16 on a basis of its ID or signature and the mapping (e.g. look-up table or database) stored within its memory 28. Accordingly, on a basis of the determined location of a sensor 16 that has emitted a signal indicative of the presence of weight, proximity or motion, the lighting control system 20 is able to determine the location or position of the passenger 22 within the vehicle cabin 70. Furthermore, based on a sequence of signals received from adjacent or neighboring sensors 16, the lighting control system 20 is able to detect movement of the passenger 22 as well as a direction of movement of the passenger 22. A time interval between signals from adjacent or neighboring sensors 16 may further enable the lighting control system 20 to determine a speed of movement of the passenger 22.

In an alternative embodiment, the location positioning system 14 may be an indoor positioning system (IPS) that relies on RFID tags, WiFi or LiFi access points or Bluetooth beacons for facilitating detection of a passenger's position and/or movement. These tags, access points or Bluetooth beacons may be located at strategic positions within the vehicle cabin 70. A transceiver that is either worn or carried by the passenger 22, such as a passenger's smart device (e.g. phone, tablet or watch) or a wearable transceiver that is embedded within the passenger's clothing, determines its location within the vehicle cabin 70 based on information received from the tags, access points or beacons. This determination may require processing the received information together with a vehicle map application. The position information that is determined may then be sent to the lighting control system 20 via a wireless signal. On a basis of the signal received from the transceiver, the lighting control system 20 is able to determine the position of the passenger 22 within the vehicle cabin 70. Similarly, based on a sequence of signals indicative of different positions, the lighting control system 20 is able to determine movement, and direction of movement of the passenger 22.

Alternatively, in the case where the location positioning system 14 relies on RFID tags, WiFi or LiFi access points or Bluetooth beacons, at least a portion of the functionality of the lighting control system 20, namely the determination of a position or location of the passenger, may be embodied within the passenger's smart device that acts as the receiver for data from the RFID tags, WiFi or LiFi access points or Bluetooth beacons. In such an embodiment, the determination of movement of the passenger 22 may be performed by the smart device which is in wireless communication with the cabin lighting 26 and/or a cabin management system (aircraft system 18) which performs the remaining portion of the functionality of the lighting control system 20.

At step 506, upon determination that a predetermined cabin condition is satisfied (i.e. that the cabin environment is dark), and upon detection of movement of the passenger 22, the lighting control system 20 causes the cabin lighting 26 to provide cabin illumination at the location of the passenger 22. Furthermore, the cabin illumination is caused to follow the movement of the passenger 22.

In accordance with the non-limiting aspect shown in FIG. 7, the lighting control system 20 causes the cabin lighting 26 to provide a localized illumination zone 50' at a location of the passenger 22. The illumination provided by the localized illumination zone 50' may provide dim lighting. By way of a non-limiting example, the illuminance provided by the localized illumination zone 50' may be less than 50 lux, and more specifically in the range of 0-50 lux, which is believed to be sufficient for facilitating movement within the vehicle cabin, but insufficient for disturbing other passengers.

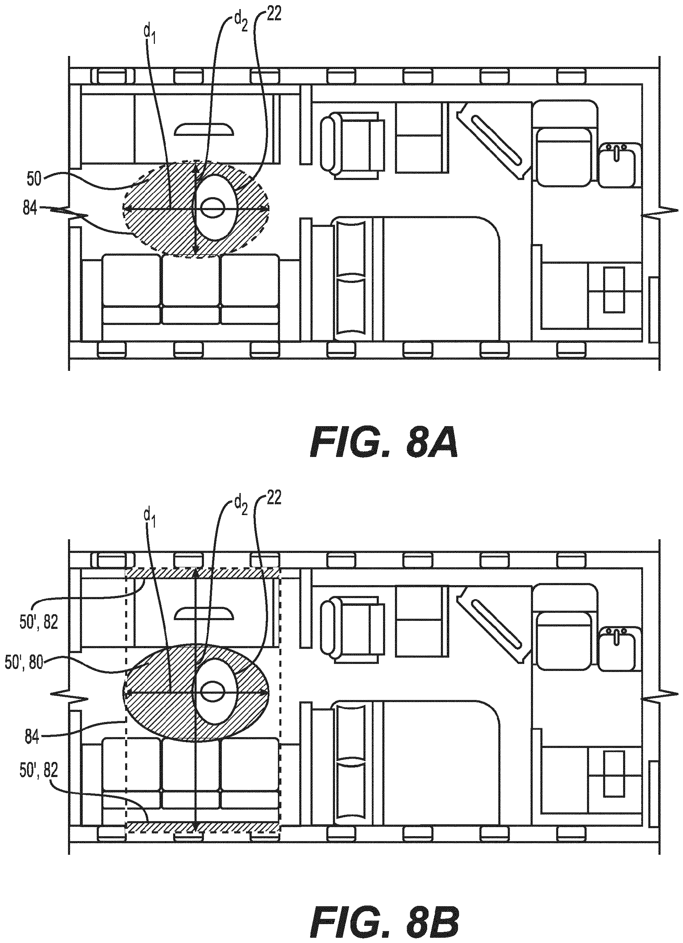

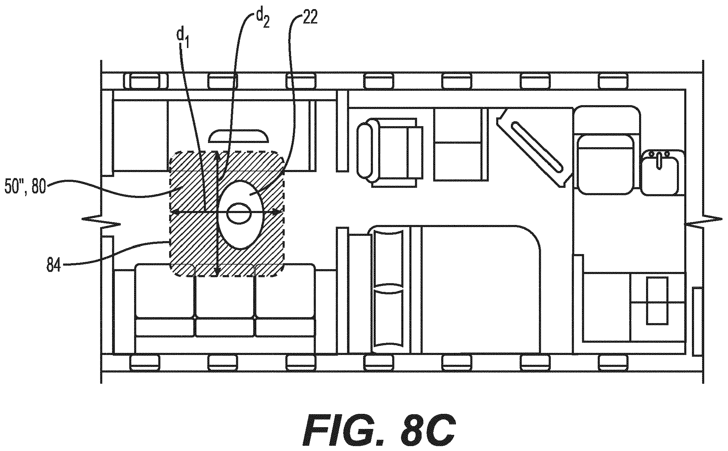

FIGS. 8A, 8B and 8C show three non-limiting examples of different types of localized illumination zones 50, 50' and 50" in accordance with the present invention. These different localized illumination zones 50, 50' and 50" may provide different illumination shapes (i.e. illumination footprints) formed from different combinations of lighting sources of cabin lighting 26.

Shown in FIG 8A is a localized illumination zone 50 that may be formed from only a single light source, namely the pathway lighting 48, and provides an illumination footprint having a generally oval shape. In an aspect of the present invention, the localized illumination zone 50 illuminates only a lower portion of the vehicle cabin 70 so as to avoid unnecessary light at a level that may be more visible to other passengers. The lower portion of the vehicle cabin 70 may be defined as being less than 0.61 m (2 feet) above the cabin floor. As will be described below, a localized illumination zone 50 that is formed from multiple (i.e. two or more) light sources of the cabin lighting 26 is also possible.

FIGS 8B shows a top plan representation of the localized illumination zone 50' shown in FIG. 7. In the non-limiting example shown in FIGS. 7 and 8A, the localized illumination zone 50' is formed from two illumination sources 48, 42 that each provide a respective illumination portion, 80 and 82. More specifically, the illumination portion 80 is provided by the pathway lighting 48 and the illumination portion 82 is provided by the wall lighting 42. Alternatively, the localized illumination zone 50' may be formed of more than two lighting sources.

Shown in FIG 8C is a localized illumination zone 50" that may be formed from multiple light sources, namely the pathway lighting 48 and kick-space lighting 46 from beneath the monuments 60. The illumination footprint of localized illumination zone 50" has a generally rectangular shape that is wider than the illumination footprint from localized illumination zone 50.

While three different localized illumination zones 50, 50' and 50" are depicted for the sake of example, it is to be understood that the localized illumination zone 50, 50' and 50" may take on many different shapes and may be provided by a single light source or multiple light sources of the cabin lighting 26. In one aspect, a single light source of the cabin lighting 26, such as the pathway lighting 48, may be dedicated for use in providing a localized illumination zone 50. In other words, the pathway lighting 48 may only be used to provide cabin illumination when the predetermined cabin conditions are satisfied and movement of the passenger 22 has been detected, such that the pathway lighting 48 is not used for other lighting operations during normal use of the cabin lighting 26.

The remainder of the description will make reference to localized illumination zone 50, but it is to be understood that the description made in relation to localized illumination zone 50 is equally applicable to localized illumination zones 50' and 50".

In accordance with the present invention, the localized illumination zone 50 provided by the cabin lighting 26 may be focused or directed towards the passenger's 22 location. The localized illumination zone 50, is considered to be focused towards the passenger's 22 location when a boundary 84 of the localized illumination zone 50 is established based on a location or position of the passenger 22. In FIGS 8A-8C, the boundary 84 of the localized illumination zones 50, 50', 50" is represented by dotted lines and has a longitudinal dimension of d₁ and a lateral dimension of d₂.

In accordance with a non-limiting embodiment, the localized illumination zone 50 may be positioned such that the passenger 22 is centered within the boundary 84 of the localized illumination zone 50 with respect to the lateral dimension d₂. As shown in FIG. 8A, the localized illumination zone 50 is positioned such that the passenger 22 is centered within the boundary 84 with respect to the lateral dimension d₂ but not with respect to the longitudinal dimension d₁. The localized illumination zone 50 is positioned such that a greater portion of the localized illumination zone 50 is positioned in front of the direction of movement of the passenger than in the opposite direction. Having more illumination in front of the passenger 22 may provide more helpful illumination during movement of the passenger 22.

In accordance with a non-limiting aspect, the localized illumination zone 50 is positioned such that greater than 70% of the longitudinal dimension d₁ of the localized illumination zone 50 is positioned in front of the passenger 22. In accordance with a further non-limiting aspect, the localized illumination zone 50 is positioned such that between 50-75% of the longitudinal dimension d₁ of the localized illumination zone 50 is positioned in front of the passenger 22.

In accordance with another non-limiting aspect, the localized illumination zone 50 has a longitudinal dimension d₁ of between 2.286m-3.048m (90-120 inches). More particularly, the localized illumination zone 50 has a longitudinal dimension d₁ of between 2.54m-2.794m (100-110 inches). Still more particularly, the localized illumination zone 50 has a longitudinal dimension d₁ of about 2.286m (90 inches). As shown in FIGS. 8A, 8B and 8C, the lateral dimension d₂ may vary depending on the shape or form desired for the localized illumination zone 50, 50' and 50".

As the passenger 22 moves within the vehicle cabin 70, the localized illumination zone 50 is caused to move with the passenger 22. The localized illumination zone 50 is caused to follow the movement of the passenger 22, such that the passenger 22 is generally positioned at the same location within the localized illumination zone 50 throughout the passenger's 22 movement. More specifically, the localized illumination zone 50 may be caused to follow the movement of the passenger 22, such that the passenger 22 is generally positioned at the same location with respect to the longitudinal dimension d₁ of the boundary 84 throughout his/her movement within the vehicle cabin. As such, the movement of the localized illumination zone 50 as it follows the movement of the passenger 22 is relatively smooth. The movement of the localized illumination zone 50 is not intended to be jumpy, wherein sections of the vehicle cabin illuminate sequentially in a "step" fashion as the passenger moves through the vehicle cabin 70.

In one aspect, the longitudinal dimension d₁ of the localized illumination zone 50 may stay generally constant as the passenger 22 moves within the cabin. Furthermore, the position of the passenger 22 in relation to the boundary 84 of the localized illumination zone 50 remains substantially constant throughout the movement of the passenger 22. However, depending on the type and positioning of the cabin monuments 60 and/or bulkheads (e.g. walls) within the vehicle cabin 70, the lateral dimension d₂ may remain constant as the passenger 22 moves within the cabin, or may contract and expand as the passenger 22 moves past various cabin monuments 60 or bulkheads. In a non-limiting aspect of the invention, the position of the passenger 22 in relation to the boundary 84 in the longitudinal direction (i.e. along dimension d₁) of the localized illumination zone 50 remains substantially constant throughout the movement of the passenger 22, while the position of the passenger 22 in relation to the boundary 84 in the lateral direction (i.e. along dimension d₂) varies.

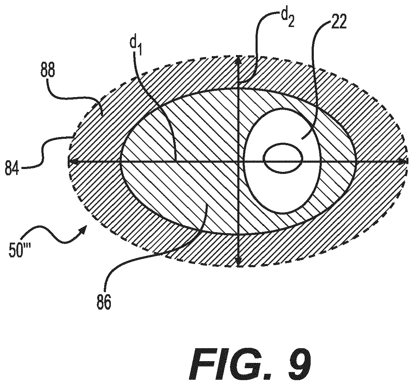

The localized illumination zone 50 may provide uniform illuminance within its boundary 84. Alternatively, the localized illumination zone 50 may provide gradient illuminance within its boundary 84. Shown in FIG. 9 is a non-limiting example of a localized illumination zone 50‴ that provides non-uniform illuminance (e.g. gradient illuminance) within its boundary 84. More specifically, the localized illumination zone 50‴ provides a first portion 86 having a greater luminosity than a second portion 88. In a non-limiting example, the illuminance provided by the first portion 86 is greater than that provided by the second portion 88. The first portion 86 of the localized illumination zone 50‴ may be positioned centrally to the second portion 88. While FIG. 9 shows a clear dividing line between the first portion 86 and the second portion 88 of the localized illumination zone 50"', it should be understood that there may be a subtle transition from the first portion 86 to the second portion 88, such that the illuminance level provided by the localized illumination zone 50‴ slowly fades from brighter illuminance to less bright illuminance.

As described above, the lighting control system 20 may comprise a mapping (e.g. look-up table or database) that associates positions/locations within the cabin with various individual lighting devices, such as individual LEDs, spot lights or optical fibers of the cabin lighting 26 that could provide illumination at the associated cabin position/location. Individual LEDs, spot lights or optical fibers may comprise unique identifiers that allow the lighting control system 20 to activate, deactivate, or adjust (e.g. dim or brighten) them individually as desired. As a passenger 22 moves through the vehicle cabin 70, the lighting control system 20 is able to determine the relatively instantaneous position or location of the passenger 22 in the manner described above. Then, on the basis of the instantaneous position or location of the passenger 22 and control logic that identifies parameters of a desired localized illumination zone 50, the lighting control system 20 is able to determine which lighting devices from the cabin lighting 26 should be illuminated at that point in time to provide the desired localized illumination zone 50. The lighting control system 20 is then able to issue signals to those individual lighting devices for causing them to be activated in a manner that provides the localized illumination zone 50 to the passenger 22 while the passenger is at a given position within the cabin. As the passenger 22 moves through the vehicle cabin, different lighting devices are activated and deactivated so as to maintain a boundary 84 of the localized illumination zone 50 substantially constant around the passenger.

It should be understood that the control logic (e.g. instructions, or one or more applications) processed by the lighting control system 20 may identify which lighting sources to use (e.g. pathway lighting, wall lighting, kick-space lighting, etc.), define the boundary 84 of the localized illumination zone, specify gradient or uniform lighting, and define the shape of the illumination footprint, among other possibilities, etc.

Modifications and improvements to the above-described implementations of the present invention may become apparent to those skilled in the art. The foregoing description is intended to be exemplary rather than limiting. The scope of the present invention is therefore intended to be limited solely by the scope of the appended claims.

## Claims

1. A system for providing cabin lighting (26) within a vehicle cabin (70), the system comprising:
cabin lighting (26) for providing illumination to the cabin (70);
a location positioning system (14) for detecting a location of a passenger (22); and
a lighting control system (20) for:
determining whether a predetermined cabin condition is satisfied;
detecting movement of a passenger (22) within the vehicle cabin (70) on a basis of signals from the location positioning system (14); **characterised by**,
upon detecting movement and direction of movement of the passenger (22) within the cabin (70) and upon determining that the predetermined cabin condition is satisfied, causing the cabin lighting (26) to provide cabin illumination with a localized illumination zone (50) at a location of the passenger (22), wherein the localized illumination zone (50) follows the movement of the passenger (22); and
wherein the localized illumination zone (50) is positioned such that a greater portion of the localized illumination zone (50) is positioned in front of a direction of movement of the passenger (22) than in a direction opposite said direction of movement.

2. The system of claim 1, wherein the predetermined cabin condition is satisfied when ambient light in the cabin (70) is below a predetermined threshold.

3. The system of claim 1, wherein the predetermined cabin condition is satisfied when the cabin lighting (26) is in an off condition.

4. The system of claim 3, wherein the predetermined cabin condition is satisfied when the cabin lighting (26) is in an off condition and an environment outside the vehicle is dark.

5. The system of claim 1, wherein the location positioning system (14) comprises at least one of proximity sensors, motion sensors and weight sensors (16).

6. The system of claim 1, wherein the location positioning system (14) comprises at least one of RFID tags, WiFi access points, LiFi access points and Bluetooth beacons.

7. The system of claim 1, wherein the lighting control system (20) further detects a direction of movement of the passenger (22) on a basis of signals from the location positioning system (14).

8. The system of claim 1, wherein the cabin lighting (26) comprises at least one of overhead lighting (40), wall lighting (42), galley lighting, monument lighting, kick-space lighting (46), PSU lighting, pathway lighting (48) and lavatory lighting.

9. The system of claim 1, wherein the cabin lighting (26) comprises at least one lighting device in the form of LED lights, OLED strips, OLED panels, spot lights and fibre-optic lights.

10. The system of claim 1, wherein the localized illumination zone (50) illuminates only a lower portion of the vehicle cabin (70).

11. The system of claim 1, wherein the localized illumination zone (50) is focused towards the passenger's location.

12. The system of claim 1, wherein the localized illumination zone (50) is centered about the passenger's location in a lateral direction

13. The system of claim 1, wherein the localized illumination zone (50) has a longitudinal dimension of between 2.286m-3.048m (90-120 inches).

## Patentansprüche

1. System zum Bereitstellen einer Kabinenbeleuchtung (26) innerhalb einer Fahrzeugkabine (70), wobei das System umfasst:
Kabinenbeleuchtung (26) zum Bereitstellen einer Ausleuchtung für die Kabine (70);
ein Standortbestimmungssystem (14) zum Erfassen eines Standorts eines Passagiers (22); und
ein Beleuchtungssteuerungssystem (20) zum:
Bestimmen, ob eine vorbestimmte Kabinenbedingung erfüllt ist;
Erfassen einer Bewegung eines Passagiers (22) innerhalb der Fahrzeugkabine (70) auf der Grundlage von Signalen von dem Standortbestimmungssystem (14);
**gekennzeichnet durch**, beim Erfassen einer Bewegung und Bewegungsrichtung des Passagiers (22) innerhalb der Kabine (70) und beim Bestimmen, dass die vorbestimmte Kabinenbedingung erfüllt ist, Veranlassen, dass die Kabinenbeleuchtung (26) eine Kabinenausleuchtung mit einer lokalisierten Ausleuchtungszone (50) an einem Standort des Passagiers (22) bereitstellt, wobei die lokalisierte Ausleuchtungszone (50) der Bewegung des Passagiers (22) folgt; und
wobei die lokalisierte Ausleuchtungszone (50) so positioniert ist, dass ein größerer Teil der lokalisierten Ausleuchtungszone (50) vor einer Bewegungsrichtung des Passagiers (22) als in einer Richtung entgegengesetzt zu der Bewegungsrichtung positioniert ist.

2. System nach Anspruch 1, wobei die vorbestimmte Kabinenbedingung erfüllt ist, wenn ein Umgebungslicht in der Kabine (70) unter einem vorbestimmten Schwellenwert liegt.

3. System nach Anspruch 1, wobei die vorbestimmte Kabinenbedingung erfüllt ist, wenn sich die Kabinenbeleuchtung (26) in einem Aus-Zustand befindet.

4. System nach Anspruch 3, wobei die vorbestimmte Kabinenbedingung erfüllt ist, wenn sich die Kabinenbeleuchtung (26) in einem Aus-Zustand befindet und eine Umgebung außerhalb des Fahrzeugs dunkel ist.

5. System nach Anspruch 1, wobei das Standortpositionierungssystem (14) mindestens eines von Näherungssensoren, Bewegungssensoren und Gewichtssensoren (16) umfasst.

6. System nach Anspruch 1, wobei das Standortpositionierungssystem (14) mindestens eines von RFID-Tags, WiFi-Zugangspunkten, LiFi-Zugangspunkten und Bluetooth-Beacons umfasst.

7. System nach Anspruch 1, wobei das Beleuchtungssteuerungssystem (20) ferner eine Bewegungsrichtung des Passagiers (22) auf der Grundlage von Signalen von dem Positionsbestimmungssystem (14) erfasst.

8. System nach Anspruch 1, wobei die Kabinenbeleuchtung (26) mindestens eines von Deckenbeleuchtung (40), Wandbeleuchtung (42), Bordküchenbeleuchtung, Festpunktbeleuchtung, Unterbaubeleuchtung (46), Staufachbeleuchtung, Wegbeleuchtung (48) und Toilettenbeleuchtung umfasst.

9. System nach Anspruch 1, wobei die Kabinenbeleuchtung (26) mindestens eine Beleuchtungsvorrichtung in Form von LED-Leuchten, OLED-Streifen, OLED-Paneelen, Punktstrahlern und faseroptischen Leuchten umfasst.

10. System nach Anspruch 1, wobei die lokalisierte Ausleuchtungszone (50) nur einen unteren Abschnitt der Fahrzeugkabine (70) ausleuchtet.

11. System nach Anspruch 1, wobei die lokalisierte Ausleuchtungszone (50) auf den Standort des Passagiers fokussiert ist.

12. System nach Anspruch 1, wobei die lokalisierte Ausleuchtungszone (50) in einer seitlichen Richtung um die Position des Passagiers zentriert ist.

13. System nach Anspruch 1, wobei die lokalisierte Ausleuchtungszone (50) eine Längsabmessung zwischen 2,286 m - 3,048 m (90 - 120 Zoll) aufweist.

## Revendications

1. Système pour fournir un éclairage de cabine (26) à l'intérieur d'une cabine de véhicule (70), le système comprenant :
un éclairage de cabine (26) pour fournir une illumination à la cabine (70) ;
un système de positionnement d'emplacement (14) pour détecter l'emplacement d'un passager (22) ; et
un système de commande d'éclairage (20) pour :
déterminer si une condition de cabine prédéterminée est satisfaite ;
détecter le déplacement d'un passager (22) à l'intérieur de la cabine de véhicule (70) sur la base de signaux provenant du système de positionnement d'emplacement (14) ;
**caractérisé par**, lors de la détection du déplacement et de la direction du déplacement du passager (22) à l'intérieur de la cabine (70) et lors de
la détermination que la condition de cabine prédéterminée est satisfaite, l'amenée de l'éclairage de cabine (26) à fournir une illumination de cabine avec
une zone d'illumination localisée (50) à un emplacement du passager (22), dans lequel la zone d'illumination localisée (50) suit le déplacement du passager (22) ; et
dans lequel la zone d'illumination localisée (50) est positionnée de sorte qu'une plus grande partie de la zone d'illumination localisée (50) soit positionnée devant une direction de déplacement du passager (22) que dans une direction opposée à ladite direction de déplacement.

2. Système selon la revendication 1, dans lequel la condition de cabine prédéterminée est satisfaite lorsque la lumière ambiante dans la cabine (70) est inférieure à un seuil prédéterminé.

3. Système selon la revendication 1, dans lequel la condition de cabine prédéterminée est satisfaite lorsque l'éclairage de cabine (26) est dans une condition éteinte.

4. Système selon la revendication 3, dans lequel la condition de cabine prédéterminée est satisfaite lorsque l'éclairage de cabine (26) est dans une condition éteinte et qu'un environnement à l'extérieur du véhicule est sombre.

5. Système selon la revendication 1, dans lequel le système de positionnement d'emplacement (14) comprend au moins l'un parmi des capteurs de proximité, des capteurs de mouvement et des capteurs de poids (16).

6. Système selon la revendication 1, dans lequel le système de positionnement d'emplacement (14) comprend au moins l'un parmi des étiquettes RFID, des points d'accès WiFi, des points d'accès LiFi et des balises Bluetooth.

7. Système selon la revendication 1, dans lequel le système de commande d'éclairage (20) détecte en outre une direction de déplacement du passager (22) sur la base de signaux provenant du système de positionnement d'emplacement (14).

8. Système selon la revendication 1, dans lequel l'éclairage de cabine (26) comprend au moins l'un d'un éclairage au plafond (40), éclairage mural (42), éclairage d'office, éclairage d'équipement, éclairage d'espace pour les pieds (46), éclairage PSU, éclairage de couloir (48) et éclairage de toilettes.

9. Système selon la revendication 1, dans lequel l'éclairage de cabine (26) comprend au moins un dispositif d'éclairage sous la forme de lumières LED, de bandes OLED, de panneaux OLED, de spots et de lumières à fibre optique.

10. Système selon la revendication 1, dans lequel la zone d'illumination localisée (50) illumine seulement une partie inférieure de la cabine de véhicule (70).

11. Système selon la revendication 1, dans lequel la zone d'illumination localisée (50) est focalisée vers l'emplacement du passager.

12. Système selon la revendication 1, dans lequel la zone d'illumination localisée (50) est centrée autour de l'emplacement du passager dans une direction latérale.

13. Système selon la revendication 1, dans lequel la zone d'illumination localisée (50) a une dimension longitudinale comprise entre 2,286 m et 3,048 m (90 et 120 pouces).
